Europäisches Patentamt

European Patent Office

Office européen des brevets

(11) Publication number: **0 332 858**
**A2**

# EUROPEAN PATENT APPLICATION

(21) Application number: **89102500.9**

(51) Int. Cl.⁴: **H04B 9/00**

(22) Date of filing: **14.02.89**

(30) Priority: **16.02.88 IT 1943088**

(43) Date of publication of application:
**20.09.89 Bulletin 89/38**

(84) Designated Contracting States:
**AT BE CH DE FR GB IT LI LU NL SE**

(71) Applicant: **FIAR FABBRICA ITALIANA APPARECCHIATURE RADIOELETTRICHE S.p.A.**
**Via G.B. Grassi, 93**
**I-20157 Milano(IT)**

(72) Inventor: **Madde, Roberto**
**Corso Como 9**
**I-20154 Milano(IT)**
Inventor: **Arrigoni, Marco**
**Via Zelati 60**
**I-20030 Palazzolo Milanese(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Two-way optical link system.**

(57) A two-way optical link system is described, using, at the two ends of the link, two solid state laser sources pumped by laser diodes and emitting at different but neighboring frequencies. In particular, each of the two laser sources comprises the same active material, preferably neodymium, included in a different crystal. According to another solution, the laser sources are constituted by vibronic lasers which can be tuned on a very wide band (alexandrite lasers).

EP 0 332 858 A2

## TWO-WAY OPTICAL LINK SYSTEM

The present invention relates to a two-way optical link system, in particular between satellites, using two solid-state laser sources.

As is known, the interest in optical space communications is rising every year and the largest space organizations, whether national or international (such as NASA, ESA, NASDA, INTELSAT) have been funding research in this field for a long time.

This interest is due to the advantages of optical communications in free space with respect to conventional microwave ones, which reside in the extremely large bandwidth available, in the limited dimensions of the devices required to establish the link and in the ease in providing a very narrow communication beam. This last characteristic is particularly important as limits the possibility of interference.

Three types of free-space long-distance optical communication system have been hitherto provided:

a) link between a low-orbit satellite and a geostationary satellite; low-orbit satellites are usually scientific satellites which gather a large amount of data at each pass over the earth; these data must then be sent to an earth station which is in view of the satellite only for short periods during the day. In order to solve this problem, it has therefore been proposed to use a geostationary satellite, which would be able to have the low-orbit satellite in view for a much longer time; the link between the two satellites would therefore allow to gather a greater amount of data and to transmit said data more continuously;

b) link between a probe at great distance from the earth and a geostationary satellite. In fact, when deep-space missions lasting many years are undertaken, contact becomes increasingly difficult as the probe increases its distance from the earth, both because the distance increases and because the beam of a microwave channel constantly widens. The use of an optical system would improve the situation;

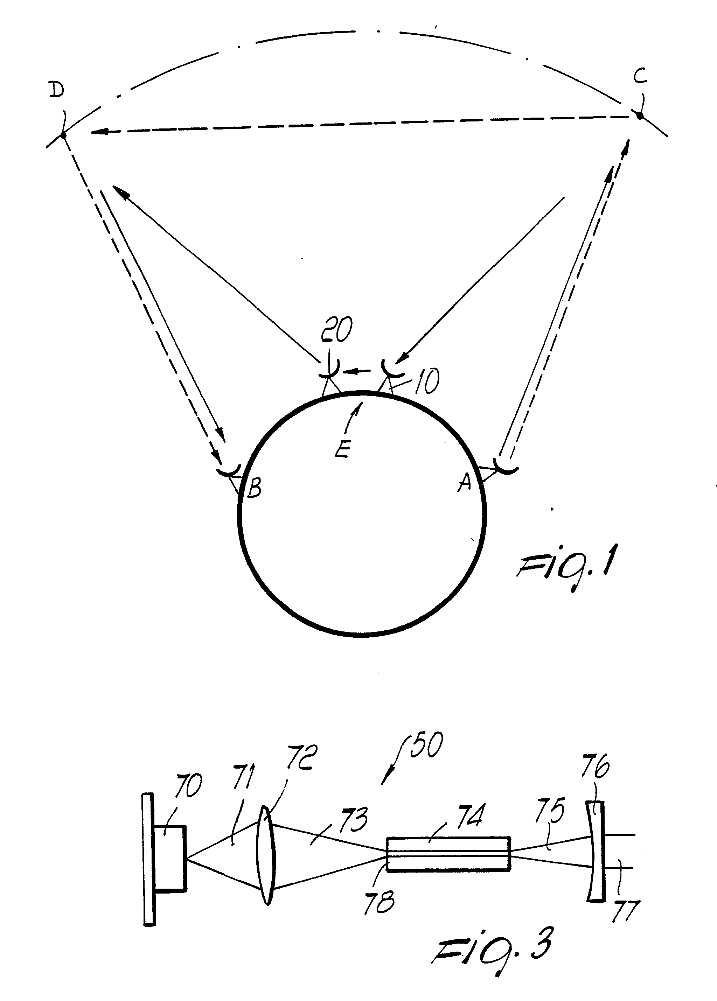

c) link between two geostationary satellites. In fact, in the case of satellites sufficiently spaced on the geostationary arc (at a mutual distance of 45,000-72,000 km) it is currently necessary to resort to a two-step link (as shown by solid lines in figure 1), whereas an optical link would avoid said two-step link (dotted line of figure 1). This solution may become very advantageous for telephone calls or for two-way communications in general, where the need to minimize the signal propagation delay is one of the most stringent requirements. Another advantage resides in that this kind of link requires only two microwave channels (instead of four as in the two-step case), increasing the availability of channels for earth-satellite communications and vice versa.

It should be noted that of the three types of link, only the last one requires a truly two-way link, of the "full duplex" type, since in the other two cases there is a main channel (low-orbit satellite/geostationary satellite and probe/satellite) and the return link has less stringent requirements in terms of data rate and power.

During recent years, three possible laser sources have been identified for this type of free-space optical communications, namely: the $CO_2$ laser (at 10,600 nm), the semiconductor laser (monomode infrared laser diode) and the neodymium infrared laser.

The $CO_2$ laser, suitable for a heterodyne communications system, has been recently neglected due to numerous problems in its technology and in the reliability of its components.

The laser diode (in the 790-840 nm band) is the candidate source for the first experimental missions; the resulting communications system is of the direct detection type, and pulse-modulation techniques are used. However, this solution, too, is not ideal due to the powers currently available, which are not such as to ensure links at a high transmission rate and therefore require multiplexing of optical beams at different wavelengths, therefore entailing a great complication of the system.

The neodymium laser (in particular the laser obtained by doping with Nd ions a YAG crystal, which is the most widespread type and emits at 1064 nm) has been hitherto kept to one side due to the poor reliability of the lamp pumping it requires. However, a new diode-pumping method has been recently developed, providing higher optical power and a reliability comparable with (if not better than) that obtainable with laser diodes.

As to the implementation of a two-way link, it should be noted that it requires the use of two channels with separate frequencies, in order to avoid mutual interference, and the type of modulation depends on the spectral purity of the laser emission; in particular, when the width of the chosen line is comparable with, or larger than, the band of the modulated signal, only the direct-detection amplitude-modulation technique can be used, while phase- or frequency-modulation and heterodyne reception can become convenient when high spectral purity is available.

2

Optical links have therefore been proposed which are based on $CO_2$ or Nd:YAG lasers with heterodyne detection; on Nd:YAG laser diodes with direct modulation/detection using two different harmonics (e.g. the fundamental one at 1064 nm and the second harmonic at 532 nm or the emission line at 1319 nm); or on laser diodes with different wavelengths, with direct modulation/detection.

The first case (heterodyne detection) poses considerable problems, besides purity and stability in frequency due to the difficulty of implementing the lock circuit of the local optical oscillator for detection; the use of techniques typical of microwaves at optical wavelengths furthermore creates considerable problems as to alignment, isolation between the transmission and the reception frequency, and focusing the local oscillator on the light-detector.

In the second case, the "full duplex" link is particularly troublesome, since it uses, for both terminals of the link, very different transmission and reception wavelengths; this means that a particular optical design for each transmitter and for each receiver is necessary.

The third case (monomode laser diodes at different wavelengths) is currently considered the most advantageous, however, even this case is not completely satisfactory, due to the limited optical power available with current laser diodes, so that the transmission rate for each channel is necessarily low.

Given this situation, the aim of the present invention is to provide a two-way optical link system capable of solving the disadvantages of the prior art and in particular capable of ensuring the power levels required for "full duplex" applications.

Within this aim, an object of the present invention is to provide a link system entailing a limited complexity, with transmitters and receivers at each terminal having a practically identical optical design, with reduced costs and implementation expenses.

Not least object of the present invention is to provide a link system of the indicated type, capable of providing maximum reliability as well as characteristics adequate to the high requirements of information and data transmission with free-space links.

This aim, the objects mentioned and others which will become apparent hereinafter are achieved by a two-way optical link system as defined by the accompanying claims.

According to the invention, laser sources which are different but use the same active material are employed to provide the two-way optical link system, so as to obtain different but neighboring wavelengths, one for each link direction.

In particular, according to the invention, the fact is appreciated that though a particular neodymium laser (i.e. the Nd:YAG laser) emitting at 1064 nm is currently employed and considered, there are other materials which can be doped with neodymium, obtaining active means which operate in the same infrared region, for which it is possible to use the same pumping method used for Nd:YAG with equally interesting results; the following table lists some of them together with their emission wavelength and their main characteristics.

TABLE

| NAME OF CRYSTAL | COMPOSITION | EMISSION WAVELENGTH (nm) | NOTES |
|---|---|---|---|
| YAG | $YAl_3O_{12}$ | 946 1064 1319 | Other emission wavelengths. High pump efficiency |
| YLF | $YLiF_4$ | 1047 1051 | Polarized emission. Narrow absorption band |
| YA1O | $YAlO_3$ | 1079 | |
| BEL | $La_2Be_2O_5$ | 1061 | Average pump efficiency Wide absorption band. |
| $YVO_4$ | $YVO_4$ | 1342 | High pump efficiency. Wide absorption band. |
| LIIG-8 | GLASS | 1054 | Wide absorption band. High pumping treshold. |

In practice, in this manner two laser sources with the same active material, emitting on two neighboring wave lengths, are used. The relative proximity of the two wavelengths provides practically identical receiver and transmitter optical designs for each direction of the link: in particular it is possible to use the same telescope and the same optics; during the implementation of the system it is merely necessary to select an appropriate light-detector which is optimized according to the wavelength to be detected.

By virtue of this solution an increased optical power may be obtained with respect to the hitherto proposed diode links. In fact, though at the wavelengths of diodes optical detectors are more sensitive than those suitable for wavelengths around 1000 nm, the power obtainable by a diode pumped solid-state laser in any case ensures higher data rates suitable for the purposes.

With solid-state laser sources pumped by laser diodes it is possible to consider the generation of higher-order harmonics (typically the second, in the green, which is at 532 nm for the Nd:YAG laser, and the third, in the near ultraviolet, which is at 355 nm) by introducing a non linear element inside the resonating laser cavity. Consequently, according to the invention, the two laser sources with different active materials can be both operated at their fundamental frequency or both at their second harmonic (for example, using ND:YAG and Nd:YLF, at the frequencies of 532 nm and 523.5 nm respectively), or at their third, and so on.

The invention is successfully applicable especially when direct modulation/demodulation is used; in this case, the discriminability of the two emission lines is essential, and the use of two laser sources emitting at different frequencies is therefore compulsory in order to obtain a two-way link.

Though up to now only laser sources obtained using neodymium as active material included in different materials (YAG, YLF, glass, etc.) have been mentioned, the invention is not limited to this case, but it also comprises two other solutions which provide laser sources capable of providing two-way links with two wavelengths which are different but are sufficiently close to allow the use of practically identical optical designs in both directions; namely, the use of laser sources containing an active material different from neodymium (such as e.g. erbium or holmium or chromium) with different hosts, and the use of solid-state lasers tunable on a very wide band (tens of nm) so as to practically obtain a plurality of mutually discriminable lines (vibronic lasers).

Though the use of chromium and erbium as active material is currently disadvantageous with respect to neodymium due to the greater distance of the pairs of emission lines, it is conceivable that materials having improved wavelength proximity will be discovered in the future and will therefore be advantageous for the present application.

As regards vibronic lasers, alexandrite lasers currently exist. The lower laser level of alexandrite is not composed of a single state or group of discrete states, but forms a continuous set of states within which a single line can be selected by tuning the laser's resonating cavity. This prerogative is due to the interaction of molecular vibrational levels with the emission stimulated in the material; the alexandrite laser can consequently be tuned between 720 and 800 nm. This wavelength is of considerable interest, since it corresponds to the region of maximum quantum efficiency of avalanche silicon photodiodes and would therefore provide potentially a better system performance than an Nd laser.

The alexandrite laser has hitherto been continuously pumped with filament lamps or krypton lasers; in this case a very high efficiency (>85%) has been obtained.

The only reason which currently prevents the use of this material with diode pumping resides in alexandrite's absorption spectrum, which has a peak around approximately 680 nm and a wider region around 640 nm. When high-power laser diodes with emission in this spectral region will be available, alexandrite will be usable for an inter-satellite two-way link by tuning the two transmitters to wavelengths separated by 20-30 nm.

Practical examples of application of laser sources for two-way optical links according to the invention are further clarified with reference to the accompanying drawings, wherein:

figure 1 is an exemplifying diagram of an inter satellite link in which the system according to the invention is usable;

figure 2 is a general block diagram of the design of a transmitter/receiver usable according to the invention;

figure 3 is a general diagram of a laser source with diode pumping, usable according to the invention; and

figure 4 is a general diagram of the laser-diode pumping in a redundant or more powerful system.

With reference to figure 1, the link between two earth stations A and B, arranged at such a distance as to not allow a direct link or a link by means of a single satellite, is illustrated. With a two-step system, indicated in the figure by solid lines, a pair of geostationary satellites C and D (placed at the altitude of 36,000 km) is required; said satellites communicate with one another by means of an intermediate earth station E comprising a pair of antennas, a receiving one 10 and a transmitting one 20. As is obvious, this communication system is not only expensive but also introduces a delay which limits its use in full-duplex two-way systems. With an inter-satellite link system such as the one shown in broken lines, for which the present invention is applicable, the intermediate earth station is eliminated, with the mentioned advantages both in economical terms and in terms of the smaller number of channels used, and most of all with those related to the possibility of implementing perfectly bi-directional real time links.

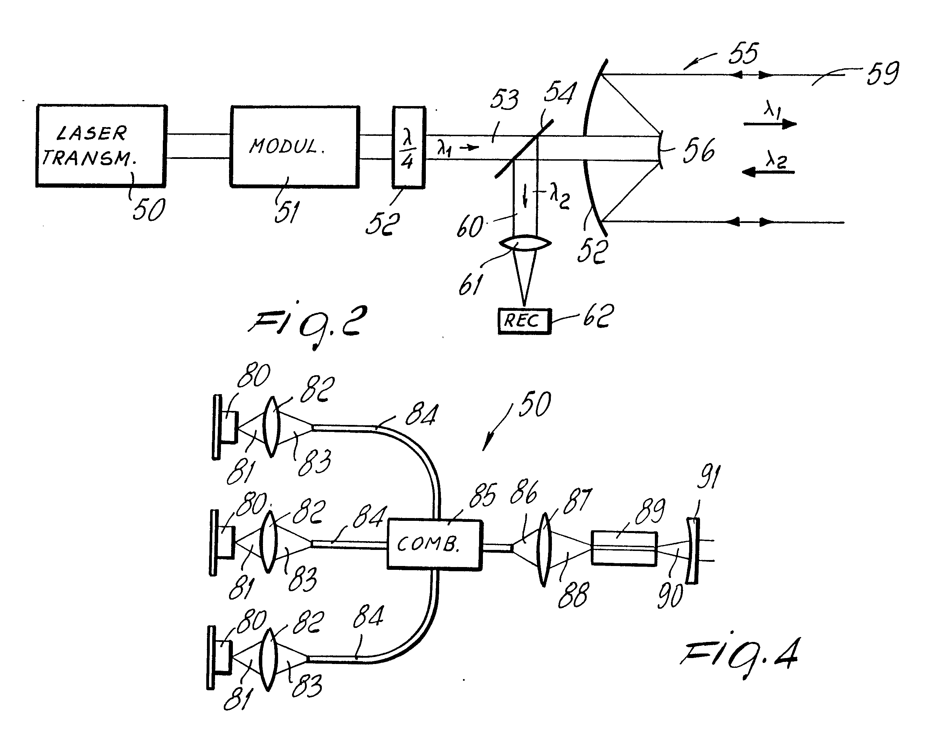

Figure 2 illustrates the conceptual diagram related to a transmitter/receiver device usable according to the invention. In this diagram, the sighting, acquisition and tracking system has been omitted, since it is not essential for understanding and does not relate to the invention. The illustrated device has a conventional basic structure and comprises a laser transmitter or source 50 which generates a laser beam at the specific wavelength depending on the crystal and on the active material used. This beam is sent to an electro-optical modulator 51, where it is modulated in the chosen manner (in particular polarization-modulated). At the output of the modulator 51, the beam is in one of the two linear polarization states (horizontal or vertical) which, after passing through a lamina 52 at $\lambda$ /4 is converted to dextrorotatory or levorotatory circular polarization. The beam thus modulated (indicated at 53 in the figure) is then passed through a dichroic beam separator 54 which only allows the passage of radiation at the transmission frequency (here, $\lambda_1$), deflecting the radiation at the reception frequency (indicated at $\lambda_2$). The transmission beam is then sent to a telescope 55, for example a Cassegrain reflector, for free-space transmission. In the telescope the beam is reflected by the mirrors schematically indicated at 56 and 58 and widened as indicated in the figure by the beam 59 which also comprises the reception beam at the frequency $\lambda_2$. Said reception beam, after being focused by the telescope, is reflected by the dichroic separator 54 towards a lens 61 (beam 60) which focuses it towards the receiver 62 constituted by avalanche photodiodes.

The diagram of the laser transmitter 50 of figure 2 is also shown in figures 3 and 4, which relate to a single-diode system and to a multiple-diode redundant system. In the case of figure 3, the transmitter comprises a pumping laser diode 70 which generates a beam 71 which is focused by a lens 72, obtaining the beam 73 sent to the laser rod 74 which is made, according to the invention, for example of Nd:YAG. In this case the face 78 of the rod is treated so as to obtain a reflectivity $R \leq 0.25\%$ at 810 nm (i.e. so as to be transparent at that frequency) and have an $R \geq 99.8\%$ at 1064 nm (i.e. so as to almost completely reflect that frequency). The laser beam 75 exiting from the rod 74 is then sent to an output mirror 76, obtaining the beam 77 to be sent to the modulator. As regards further details on the structure of the components of said diagram, reference is made to the existing literature on the subject, e.g. Kozlowsky, W.J. et al., "Diode-pumped continuous-wave Nd:glass laser", Optics Letters, vol. 11, No. 12, 1986, and Fan T.Y. et al., "Efficient GaAlAs diode-laser-pumped operation of Nd:YLF at 1,047 $\mu$m with intracavity doubling to 523.6 $\mu$m". Optics Letters, vol. 11, No. 4, 1986, Sipes D.L., "Highly efficient Nd:YAG laser end pumped by a semiconductor laser array", Applied Physics Letters, 47(2), 1985.

In the case of a redundant multiple-diode system, or if a higher power than that obtainable with a single diode is required, the transmitter 50 is formed by a plurality of pumping laser diodes 80 which generate beams 81 which, after focusing through a respective plurality of lenses 82, are focused in beams 83 and sent to a combiner 85 by means of optical-fiber guides 84. The output of the combiner 85 (beam 86) is then refocused into the beam 88 through the lens 87 and then, as in the example of figure 3, sent to the laser rod 89, produced according to the invention. The laser beam 90 thus obtained is then sent to the output mirror 91 to be modulated in the modulator 51.

As can be seen from the above description, the invention fully achieves the proposed objects. The link system according to the invention, which uses, at the two terminals of the link, two solid-state diode-pumped laser sources so as to emit on two different but neighboring frequencies in fact allows to implement a perfectly bi-directional link of adequate power and high simplicity by virtue of the possibility to use practically identical optical designs at said two terminals.

The invention thus conceived is susceptible to numerous modifications and variations, all of which are within the scope of the inventive concept.

All the details may furthermore be replaced with other technically equivalent elements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Two-way optical link system, characterized in that it uses, at the two ends of the link, two solid-state laser sources pumped by laser diodes and emitting at different but neighboring frequencies.

2. System according to claim 1, characterized in that each of said laser sources comprises the same active material included in a different crystal.

3. System according to claims 1 and 2, characterized in that said active material is neodymium.

4. System according to claims 1 and 2, characterized in that said active material is erbium, chromium or holmium.

5. System according to one or more of the preceding claims, characterized in that both said laser sources operate at the fundamental frequency or at the same harmonic.

6. System according to one or more of the preceding claims, characterized in that the crystal hosting said active material is chosen in the group comprising: YAG, YLF, YA10, BEL, $YVO_4$, LHG-8 or other types of glass.

7. System according to claim 1, characterized in that said laser sources are tunable sources (alexandrite vibronic lasers).

EP 0 332 858 A2

Fig.1

Fig.3

EP 0 332 858 A2

Fig.2

Fig.4